# FASCICULE DE BREVET EUROPEEN

(11) **EP 1 870 977 B1**
(45) Date de publication et mention de la délivrance du brevet: **01.09.2010**
(21) Numéro de dépôt: 07356081.5
(22) Date de dépôt: 15.06.2007
(51) Int. Cl.: H02H 9/06

(54) **Dispositif de protection contre les surtensions associant en série plusieurs éclateurs à déclenchement simultané et procédés correspondants**
Vorrichtung zum Schutz gegen Überspannungen, die mit mehreren, in Reihe geschalteten Funkenstrecken mit simultaner Auslösung verbunden ist, und entsprechende Verfahren
Device for protecting against voltage surges connecting several spark gaps with simultaneous triggering in series and corresponding methods

(30) Priorité: 19.06.2006 FR 0605470
(43) Date de publication de la demande: 26.12.2007
(73) Titulaire: ABB France, 92566 Rueil-Malmaison Cedex (FR)
(72) Inventeur: Ducourneau, Jean-Bernard, 65310 Horgues (FR)
(74) Mandataire: Reinhardt, Yves

(56) Documents cités:
- EP-A- 1 376 811
- WO-A-2005/069459
- FR-A- 2 864 711
- US-A1- 2004 120 091

## Description

La présente invention se rapporte au domaine technique général des dispositifs de protection d'installations et d'équipements électriques contre les surtensions, notamment contre les surtensions dues à la foudre.

La présente invention concerne plus particulièrement un dispositif de protection d'une installation électrique contre les surtensions pourvu d'une première borne de raccordement et d'une seconde borne de raccordement destinées à permettre le raccordement électrique dudit dispositif à ladite installation électrique, ledit dispositif comprenant un circuit reliant électriquement lesdites première et seconde bornes de raccordement, ledit circuit comprenant une première branche qui comporte au moins un premier composant de protection ainsi qu'une seconde branche qui comporte au moins un second composant de protection, lesdits premier et second composants de protection étant aptes à passer chacun d'un état bloquant dans lequel ils s'opposent à la circulation d'un courant électrique dans leur branche respective à un état passant dans lequel ils permettent à un courant de décharge de s'écouler dans leur branche respective.

La présente invention concerne également un procédé de protection d'une installation électrique contre les surtensions au cours duquel on raccorde électriquement à ladite installation électrique un dispositif de protection pourvu d'une première borne de raccordement et d'une seconde borne de raccordement, ledit dispositif comprenant un circuit reliant électriquement lesdites première et seconde bornes de raccordement, ledit circuit comprenant une première branche qui comporte au moins un premier composant de protection ainsi qu'une seconde branche qui comporte au moins un second composant de protection, lesdits premier et second composants de protection étant aptes à passer chacun d'un état bloquant dans lequel ils s'opposent à la circulation d'un courant électrique dans leur branche respective à un état passant dans lequel ils permettent à un courant de décharge de s'écouler dans leur branche respective.

La présente invention concerne enfin un procédé de fabrication d'un dispositif de protection d'une installation électrique contre les surtensions pourvu d'une première borne de raccordement et d'une seconde borne de raccordement, ledit dispositif comprenant un circuit reliant électriquement lesdites première et seconde bornes de raccordement, ledit circuit comprenant une première branche qui comporte au moins un premier composant de protection ainsi qu'une seconde branche qui comporte au moins un second composant de protection, lesdits premier et second composants de protection étant aptes à passer chacun d'un état bloquant dans lequel ils s'opposent à la circulation d'un courant électrique dans leur branche respective à un état passant dans lequel ils permettent à un courant de décharge de s'écouler dans leur branche respective.

Il est connu d'utiliser des dispositifs de protection d'installations électriques afin de préserver ces dernières des surtensions, en particulier des surtensions transitoires provoquées par des phénomènes atmosphériques de foudre ou encore par des incidents de manoeuvre au niveau des réseaux.

Ces dispositifs de protection généralement désignés par l'appellation *« parafoudre »* ou encore *« parasurtenseur »* ont pour but essentiel d'écouler à la terre les courants de défaut et d'écrêter les surtensions à des valeurs compatibles avec la tenue de l'installation électrique et des équipements auxquels ils sont raccordés.

Les parafoudres connus peuvent être basés sur des technologies différentes, selon la nature du composant de protection qu'ils mettent en oeuvre.

On connaît en particulier des parafoudres à éclateurs, c'est-à-dire utilisant en tant que composants de protection un dispositif comprenant deux électrodes placées en vis-à-vis, l'une étant connectée électriquement à la phase à protéger tandis que l'autre est connectée électriquement à la terre. Lesdites électrodes sont séparées par une zone isolante, formée par exemple par une lame de gaz, tel que l'air ou encore un corps diélectrique. Lorsque la tension électrique entre les deux électrodes atteint un niveau prédéterminé, il se produit un phénomène d'amorçage conduisant à l'établissement d'un arc électrique entre lesdites électrodes. Ledit arc crée un court-circuit qui permet l'écoulement du courant de défaut à la terre, ce qui a pour effet de protéger les équipements connectés en aval du parafoudre.

De tels parafoudres à éclateurs présentent cependant un inconvénient majeur lié précisément à l'établissement d'un arc électrique entre leurs électrodes. En effet, après que le courant de défaut a été écoulé à la terre, l'arc électrique ne s'éteint pas spontanément et continue ainsi d'écouler un courant, appelé courant de suite, lequel est débité par la source de l'installation à protéger.

Pour éviter des problèmes de sécurité liés à un échauffement incontrôlé du parafoudre et afin de garantir la continuité de service, il importe de couper rapidement ce courant de suite.

La coupure d'un tel courant de suite peut être effectuée par un organe de coupure générale du réseau, du genre disjoncteur. Cependant, l'utilisation d'un tel organe de coupure générale provoque la mise hors service du réseau dans son ensemble.

Il faut de plus que l'organe de coupure concerné soit coordonné avec le parafoudre, sur la base d'informations généralement fournies par le constructeur de parafoudre. Dans certaines situations, il est nécessaire d'ajouter un organe de coupure dédié au parafoudre. L'ensemble de ces facteurs contribue à une complexification du choix et de l'installation du parafoudre et de l'organe de coupure associé.

Il est donc préférable que ce soit le parafoudre lui-même qui puisse couper le courant de suite sans provoquer l'ouverture de l'organe de coupure générale.

Les éclateurs connus présentent, de par leur construction même, une capacité intrinsèque de coupure du courant de suite. Toutefois, celle-ci est généralement insuffisante pour faire face aux conditions réelles de fonctionnement qui peuvent mettre en jeu des courants de suite d'intensité importante circulant dans les conducteurs de phase.

Pour cette raison, divers moyens ont été utilisés dans l'art antérieur pour accroître la capacité de coupure des éclateurs.

A titre d'exemple, il est connu de pourvoir un éclateur d'une chambre de coupure qui permet de fractionner l'arc électrique en une pluralité d'arcs afin de faciliter son extinction.

Toutefois, le recours à de telles chambres de coupure présente des limites inhérentes aux règles de dimensionnement qui régissent leur fonctionnement. En premier lieu, pour accroître la capacité de coupure du dispositif, il est nécessaire d'accroître la taille de la chambre de fractionnement, ce qui a pour effet immédiat d'augmenter significativement l'encombrement global du dispositif. Ensuite, l'efficacité de la chambre de coupure étant liée d'une part à la distance qui la sépare de la zone d'amorçage et d'autre part à l'ouverture angulaire des électrodes, un tel surdimensionnement est susceptible de dégrader les performances du parafoudre, soit en influençant dans un sens défavorable la capacité d'écoulement des courants de défaut, soit en retardant le soufflage de l'arc et par conséquent son extinction.

Il est également connu d'associer en série avec un éclateur une résistance de charge dont la fonction est de limiter le courant de suite afin de faciliter sa coupure par ledit éclateur.

Toutefois, cette solution présente l'inconvénient d'introduire une tension aux bornes de la résistance lorsqu'un courant circule à travers le dispositif, ladite tension venant s'additionner à la tension d'arc de l'éclateur. Cette solution est donc généralement réservée aux parafoudres destinés à écouler des gammes de courant de faible et moyenne amplitude, afin que la présence de la résistance ne dégrade pas significativement le niveau de protection offert.

Par ailleurs, il est déjà connu de FR-A-2 864 711 un dispositif de protection contre les surtensions comportant deux éclateurs branchés en parallèle et un système de pré-déclenchement respectif relié électriquement à l'éclateur correpondant de manière à permettre son amorçage, Le dispositif comprend aussi un système de commande permettant d'activer simultanément les systèmes de pré-déclenchement pour qu'ils déclenchent simultanément les deux éclateurs. Chaque système de pré-déclenchement comporte une électrode de déclenchement et un transformateur dont le circuit secondaire est relié à l'électrode de déclenchement, les circuits primaires des deux transformateurs étant montés en parallèle.

Les objets assignés à l'invention visent par conséquent à porter remède aux différents inconvénients énumérés précédemment et à proposer un nouveau dispositif de protection contre les surtensions qui présente une capacité de coupure améliorée du courant de suite tout en offrant un très bon niveau de protection grâce à un faible temps de réponse et une bonne capacité d'écoulement du courant de défaut, et qui permette de conserver une bonne capacité de coupure sous des tensions nominales élevées.

Un autre objet de l'invention vise à proposer un nouveau dispositif de protection contre les surtensions dont la conception est particulièrement simple et bon marché.

Un autre objet de l'invention vise à proposer un nouveau dispositif de protection contre les surtensions mettant en oeuvre des composants électriques standard.

Un autre objet de l'invention vise à proposer un nouveau dispositif de protection contre les surtensions qui soit particulièrement compact et présente un faible encombrement.

Les objets assignés à l'invention visent également à proposer un nouveau procédé de protection d'une installation électrique contre les surtensions permettant d'améliorer la capacité de coupure du courant de suite tout en optimisant le niveau de protection dudit dispositif.

Un autre objet de l'invention vise à proposer un procédé de fabrication d'un dispositif de protection d'une installation électrique contre les surtensions qui confère audit dispositif une capacité de coupure améliorée et un niveau de protection optimisé.

Un autre objet de l'invention vise à proposer un procédé de fabrication d'un dispositif de protection contre les surtensions qui soit particulièrement simple et peu coûteux.

Les objets assignés à l'invention sont atteints à l'aide d'un dispositif de protection d'une installation électrique contre les surtensions tel que défini dans la revendication 1.

Les autres revendications portent sur des modes de réalisation préférés du dispositif selon l'invention et sur son utilisation.

D'autres caractéristiques et avantages de l'invention apparaîtront plus en détails à la lecture de la description qui suit, ainsi qu'à l'aide des dessins annexés fournis à titre purement illustratif et non limitatif, parmi lesquels :
- la figure 1 illustre un schéma électrique d'un premier mode de réalisation d'un dispositif de protection contre les surtensions conforme à l'invention.
- La figure 2 illustre un schéma électrique d'un second mode de réalisation d'un dispositif de protection contre les surtensions conforme à l'invention.

Le dispositif de protection 1 d conforme à l'invention est destiné à être branché en dérivation (« *en parallèle* ») sur une installation électrique afin de la protéger des surtensions, en particulier transitoires.

L'expression « *installation électrique »* fait référence à tout type d'appareil ou réseau alimenté électriquement et susceptible de subir des perturbations de tension, notamment des surtensions transitoires dues à la foudre.

Le dispositif de protection 1 peut donc avantageusement constituer un parafoudre.

Le dispositif de protection 1 conforme à l'invention est notamment destiné à être disposé entre une phase de l'installation à protéger et la terre. Il est par ailleurs envisageable, sans pour autant sortir du cadre de l'invention, que le dispositif 1 soit branché entre le neutre et la terre, entre la phase et le neutre, ou encore entre deux phases pour réaliser une protection différentielle.

Afin de permettre le raccordement électrique dudit dispositif à ladite installation électrique, celui-ci est pourvu d'une première borne de raccordement 2 et d'une seconde borne de raccordement 3.

Ledit dispositif 1 comprend un circuit reliant électriquement lesdites première et seconde bornes de raccordement 2, 3, ledit circuit comprenant lui-même une première branche 4 qui comporte au moins un premier composant de protection 5, ainsi qu'une seconde branche 6 qui comporte au moins un second composant de protection 7.

Lesdits premier et second composants de protection 5, 7 sont aptes à passer chacun d'un état bloquant dans lequel ils s'opposent à la circulation d'un courant électrique dans leur branche respective à un état passant dans lequel ils permettent à un courant de décharge de s'écouler dans leur branche respective.

Plus particulièrement, lesdits premier et second composants de protection 5, 7 sont de préférence capables, lorsqu'une tension plus élevée que la tension nominale de fonctionnement de l'installation électrique est appliquée aux bornes de raccordement 2, 3 du dispositif 1, de présenter une impédance faible et par conséquent d'écouler un courant de défaut généré par l'application de ladite surtension, tandis qu'ils présentent, lorsqu'une tension correspondant à la tension nominale de fonctionnement de l'installation électrique est appliquée aux bornes de raccordement 2, 3, une impédance très élevée qui limite voire qui empêche la circulation d'un courant électrique dans la première et la seconde branches 4, 6.

Selon une caractéristique importante de l'invention, la première branche 4 et la seconde branche 6 sont associées électriquement en série et le dispositif 1 comporte des moyens de déclenchement simultané 10 aptes à faire passer sensiblement simultanément lesdits premier et second composants de protection 5, 7 de leur état bloquant à leur état passant.

De plus, le passage de l'état bloquant à l'état passant s'effectue en un temps très court, de préférence inférieur ou égal à 5 microsecondes.

Ainsi, les moyens de déclenchement simultanés 10 permettent de commander le passage du dispositif 1 d'un état dans lequel le circuit formé par les première et seconde branches 4, 6 présente une forte impédance et n'est parcouru que par un courant d'intensité négligeable voire sensiblement nulle, à un état passant dans lequel il présente une impédance réduite voire quasi nulle et permet ainsi l'écoulement d'un courant de défaut d'intensité élevée.

Par l'expression *« passer sensiblement simultanément de leur état bloquant à leur état passant* », on indique que les passages respectifs du premier composant de protection et du second composant de protection de leur état bloquant à leur état passant coïncident temporellement, ou tout du moins s'effectuent dans un laps de temps très réduit. En d'autres termes, le décalage temporel entre le moment où le premier composant de protection devient passant et le moment où le second composant de protection devient passant est particulièrement faible et de préférence sensiblement nul.

En particulier, l'absence de retard lié à un passage aléatoire, ou étagé en cascade, des composants de protection de leur état bloquant à leur état passant permet avantageusement d'établir très rapidement entre les bornes de raccordement 2, 3 un circuit passant apte à écouler un courant de décharge, ce qui confère au dispositif 1 conforme à l'invention un temps de réponse très court et par conséquent lui permet d'offrir un excellent niveau de protection à l'installation électrique en écrêtant les surtensions à un niveau relativement bas.

En d'autres termes, les moyens de déclenchement simultané 10 sont agencés pour conférer au dispositif 1 un temps de réponse très court, c'est-à-dire pour laisser s'écouler, entre l'apparition d'une surtension aux bornes de raccordement du dispositif pris dans son état bloquant et le passage du dispositif en régime passant avec écoulement du courant de décharge à travers le premier et le second composant de protection, au maximum une durée de l'ordre de quelques microsecondes, de préférence inférieure ou égale à 5 microsecondes, et de façon particulièrement préférentielle inférieure ou égale à 2 microsecondes.

De préférence, les moyens de déclenchement simultanés 10 comprennent un premier élément de déclenchement 11 associé au premier composant de protection 5, ledit premier élément de déclenchement 11 étant apte, lorsqu'il est activé, à faire passer ledit premier composant de protection 5 de son état bloquant à son état passant.

De même, les moyens de déclenchement simultané 10 comprennent de préférence un second élément de déclenchement 12 associé respectivement au second composant de protection 7, ledit second élément de déclenchement 12 étant apte, lorsqu'il est activé, à faire passer ledit second composant de protection de son état bloquant à son état passant.

Selon une variante de réalisation préférentielle, le dispositif 1 conforme à l'invention comprend également un élément de commande 14 susceptible d'activer sensiblement simultanément le premier et le second élément de déclenchement 11, 12, afin de faire passer sensiblement simultanément les premier et second composants de protection 5, 7 de leur état bloquant à leur état passant.

Selon une caractéristique importante de l'invention, ledit élément de commande 14 est sensible à la tension appliquée aux bornes de raccordement 2, 3 du dispositif 1 et est apte à activer les premier et second éléments de déclenchement 11, 12 lorsque ladite tension franchit un seuil prédéterminé.

Plus particulièrement, lorsque la tension aux bornes 2, 3 du dispositif 1 dépasse une valeur maximale admissible par l'installation protégée, l'élément de commande 14 excite simultanément le premier et le second élément de déclenchement 11, 12 et par conséquent provoque le basculement des deux composants de protection 5, 7 de leur état bloquant à leur état passant.

Ainsi, le temps nécessaire à l'établissement du régime passant et à l'établissement d'un courant de défaut entre les bornes de raccordement 2 et 3 *via* les première et seconde branches 4, 6, est sensiblement proche du temps nécessaire à l'établissement du régime passant au sein du premier ou du second composant de protection considéré individuellement.

Bien que l'un ou l'autre des composants de protection 5, 7 puisse être formé par un composant de puissance à semi-conducteur, tel qu'un thyristor par exemple, le premier composant de protection 5 est de façon particulièrement préférentielle formé par un premier éclateur.

De même, de façon particulièrement préférentielle, le second composant de protection 7 est formé par un second éclateur.

Un tel choix technologique permet avantageusement de minimiser le coût de fabrication du dispositif tout en améliorant sa robustesse vis-à-vis des courants de foudre et sa longévité.

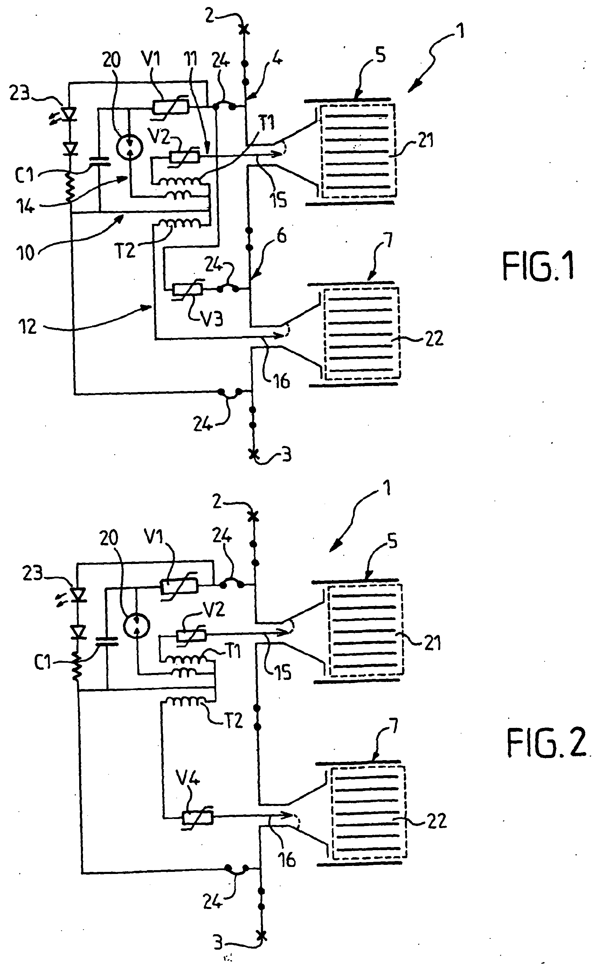

En outre, tel que cela est représenté sur les figures 1 et 2, la première et la seconde branche 4, 6 contiennent de préférence uniquement leur composant de protection 5, 7 respectif, à l'exclusion de tout autre, de telle sorte qu'aucun composant additionnel n'est susceptible d'entraver le libre écoulement du courant de foudre entre les bornes de raccordement 2, 3.

Les premier et second éclateurs présentent chacun au moins une paire d'électrodes principales entre lesquelles est susceptible de s'établir un arc électrique.

Dans ce qui suit, on considérera par commodité de description que le premier et le second composant de protection 5, 7 sont tous deux formés par un éclateur, sans que cela ne constitue une limitation de l'invention. Ainsi, de façon particulièrement préférentielle, le dispositif de protection 1 conforme à l'invention comprend au moins un premier et un second éclateur associés en série ainsi que des moyens de déclenchement simultané aptes à provoquer l'amorçage sensiblement simultané desdits premier et second éclateurs.

Selon cette variante de réalisation préférentielle l'expression « *amorçage sensiblement simultané »* indique que le temps nécessaire à l'établissement du régime passant, c'est-à-dire à l'amorçage du premier et du second éclateur 5, 7 afin de permettre l'établissement d'un courant de défaut entre les bornes de raccordement 2 et 3 *via* les première et seconde branches 4, 6, est sensiblement proche du temps nécessaire à l'établissement du régime passant au sein du premier ou du second éclateur considéré individuellement.

Bien entendu, si le premier et le second éclateur ne sont pas identiques, de telle sorte qu'ils présentent intrinsèquement des temps de réponse individuels différents, le temps de réponse de leur association en série correspondra sensiblement au temps de réponse de l'éclateur le plus lent à amorcer.

En d'autres termes, les moyens de déclenchement simultané 10 permettent de conférer à l'ensemble formé par les éclateurs 5, 7 en série, et plus généralement au dispositif 1 conforme à l'invention, une tension seuil d'amorçage reproductible et sensiblement égale à la tension élémentaire d'amorçage d'un seul desdits éclateurs, tandis que ladite tension d'amorçage d'un même ensemble dépourvu de tels moyens de déclenchement simultané serait aléatoirement comprise entre la tension seuil d'amorçage de l'un des éclateurs et la somme des tensions seuil d'amorçage de chacun des éclateurs.

Avantageusement, grâce aux moyens de déclenchement simultané, l'association en série du second éclateur avec le premier n'induit quasiment aucun retard dans la réponse globale du dispositif 1, par rapport au temps de réponse individuel des premier et second éclateurs 5, 7.

En particulier, la durée nécessaire à l'amorçage de l'ensemble formé par les deux éclateurs 5, 7 associés en série peut être de préférence inférieure à 5 microsecondes et de façon encore plus préférentielle inférieure à 2 microsecondes.

Ainsi, les moyens de déclenchement simultané conformes à l'invention sont aptes à provoquer un déclenchement précoce du dispositif 1 en agissant simultanément sur chaque éclateur 5, 7 monté en série afin de placer chaque éclateur 5, 7 en conditions de déclenchement anticipé par un abaissement individuel de sa tension-seuil d'amorçage, notamment par ionisation de l'espace inter-électrodes, ce qui a pour effet d'abaisser, sur la même période, la tension-seuil d'amorçage de l'ensemble du dispositif (c'est-à-dire d'optimiser le niveau de protection que ledit dispositif garantit).

Avantageusement, la mise en conditions d'amorçage du premier éclateur par les moyens de déclenchement est réalisée en *« temps masqué* », pendant l'infime laps de temps nécessaire à la mise en conditions d'amorçage du second éclateur (ou inversement), de telle sorte que le temps de réponse entre l'apparition d'une surtension aux bornes de raccordement 2, 3 et le passage à l'état passant de l'ensemble des deux branches 4, 6, c'est-à-dire la durée écoulée entre l'instant où débute la montée en tension et l'instant ou les éclateurs se trouvent placés tous les deux en conditions d'amorçage leur permettant de basculer sensiblement simultanément dans leur état passant, est minimisé.

Selon une variante de réalisation préférentielle, le premier élément de déclenchement comprend un premier auxiliaire d'amorçage 15 apte à provoquer, lors de l'activation dudit premier élément de déclenchement 11, l'apparition d'une décharge disruptive au niveau du premier éclateur 5.

De préférence, le second élément de déclenchement 12 comprend respectivement un second auxiliaire d'amorçage 16, ledit second auxiliaire d'amorçage 16 étant apte à provoquer, lors de l'activation du second élément de déclenchement 12, l'apparition d'une décharge disruptive au niveau du second éclateur 7 respectivement.

Par « *auxiliaire d'amorçage »* on désigne un élément qui est apte à exercer, sous la dépendance de l'élément de déclenchement associé, une action modifiant les paramètres électriques au voisinage de l'une ou de plusieurs électrodes principales de l'éclateur auquel il est associé. Ainsi, il est possible de piloter dynamiquement l'amorçage de l'éclateur associé.

En particulier, l'auxiliaire d'amorçage peut contribuer à générer une perturbation du champ électrique apte à créer une ionisation et à faciliter l'apparition d'un arc électrique.

De façon particulièrement préférentielle, le premier auxiliaire d'amorçage 15 est formé par une électrode auxiliaire, située de préférence entre les électrodes principales du premier éclateur 5.

Ainsi, une variation du potentiel électrique appliqué au premier auxiliaire d'amorçage 15 est avantageusement susceptible de créer une différence de potentiel entre ledit premier auxiliaire d'amorçage 15 et l'une des électrodes principales du premier éclateur 5. En d'autres termes, il est ainsi possible de créer une polarisation permettant l'apparition d'une décharge disruptive entre le premier auxiliaire 15 d'amorçage et l'une des électrodes principales dudit premier éclateur, cette décharge déclenchant à son tour l'amorçage d'un arc électrique entre les électrodes principales dudit premier éclateur 5.

A cette fin, le premier auxiliaire d'amorçage 15 est de préférence relié électriquement au circuit secondaire (ou *« bobinage secondaire* ») d'un premier transformateur T1, de telle sorte qu'il soit possible de faire varier le potentiel dudit premier auxiliaire d'amorçage en faisant circuler un courant électrique dans le circuit primaire (ou *« bobinage primaire* ») dudit premier transformateur T1.

Avantageusement, il est possible de déterminer la polarité et l'amplitude de ladite différence de potentiel en choisissant le sens de bobinage du circuit secondaire et le rapport entre le nombre de spires du circuit secondaire et le nombre de spires du circuit primaire du premier transformateur T1. Il est notamment possible d'obtenir une amplification de tension entre le circuit primaire et le circuit secondaire.

De façon similaire à ce qui a été décrit pour le premier auxiliaire d'amorçage 15, le second auxiliaire d'amorçage 16 peut être formé par une électrode auxiliaire située entre les électrodes principales du second éclateur 7. Ledit second auxiliaire d'amorçage 16 peut également être relié électriquement au circuit secondaire d'un second transformateur T2 de telle sorte qu'il soit possible de faire varier le potentiel dudit second auxiliaire d'amorçage 16 en faisant circuler un courant électrique dans le circuit primaire dudit second transformateur T2, afin de générer une différence de potentiel entre le second auxiliaire d'amorçage 16 et l'une des électrodes principales du second éclateur 7.

Selon une variante de réalisation préférentielle, les premier et second transformateurs T1, T2 présentent un circuit primaire commun, de telle sorte que lorsqu'un courant parcourt ledit circuit primaire commun, les deux bobinages secondaires associés respectivement au premier et au second auxiliaires d'amorçage 15, 16 modifient simultanément les potentiels respectifs desdits auxiliaires d'amorçage. De façon particulièrement préférentielle, les deux bobinages secondaires sont couplés à un circuit primaire commun à l'aide d'un unique noyau ferromagnétique, par exemple torique.

Selon une variante de réalisation, il est toutefois envisageable que les premier et second transformateurs T1, T2 soient distincts et que leurs circuits primaires respectifs soient reliés en série. Il est également envisageable que les premier et second transformateurs T1, T2 soient confondus, c'est-à-dire que le premier et le second auxiliaire d'amorçage 15, 16 soient associés en parallèle à un même bobinage secondaire unique.

Ainsi que cela est illustré à la figure 1, l'élément de commande 14 peut être réalisé à l'aide d'un circuit électronique. De préférence, l'élément de commande 14 comporte un condensateur C1 dont la décharge est susceptible de déclencher l'activation simultanée du premier et du second éléments de déclenchement 11, 12. Ainsi, selon une variante de réalisation préférentielle, l'élément de commande 14 est apte à générer une impulsion de courant qui est convertie simultanément, par les transformateurs T1, T2, en deux impulsions de tension synchrones appliquées respectivement aux électrodes auxiliaires d'amorçage du premier et du second éclateurs.

Selon une variante de réalisation préférentielle, l'élément de commande 14 comporte également un éclateur à gaz 20 associé en parallèle au condensateur C1 de telle sorte que, lorsque ledit éclateur à gaz 20 se déclenche, il court-circuite ledit condensateur C1 qui se décharge dans le circuit primaire du ou des transformateurs T1, T2.

Avantageusement, ledit éclateur à gaz 20 présente un seuil de déclenchement inférieur à celui des premier et second éclateurs 5, 7 et confère à l'élément de commande 14 sa sensibilité à la tension appliquée aux bornes de raccordement 2, 3 du dispositif 1.

Bien entendu, l'élément de commande 14 ainsi que les éléments de déclenchement 11, 12 ne sont pas limités à des schémas particuliers de circuits électroniques. Le dispositif 1 conforme à l'invention est susceptible de mettre en oeuvre d'autres arrangements équivalents.

Selon une variante de réalisation préférentielle, le premier éclateur 5 et/ou le second éclateur 7 sont associés chacun à une chambre de coupure 21, 22 susceptible d'éteindre un arc électrique formé au niveau de l'éclateur correspondant.

De façon bien connue, de telles chambres de coupure peuvent comprendre un dispositif de fractionnement apte à scinder l'arc électrique en une pluralité d'arcs de sorte que la tension nécessaire au maintien de ladite pluralité d'arcs, laquelle est égale à la somme des tensions d'arcs élémentaires, soit supérieure à la tension nominale de fonctionnement appliquée aux bornes de l'éclateur. Lesdites chambres peuvent également être pourvues de moyens de génération d'un gaz aptes à désioniser le plasma et à refroidir l'arc.

Par ailleurs, les éclateurs 5 et 7 peuvent présenter un agencement de leurs électrodes principales qui favorise le soufflage de l'arc électrique afin d'allonger ce dernier et/ou de le transférer vers leur chambre de coupure respective. Ainsi, les électrodes principales de chaque éclateur 5, 7 délimiteront de préférence un espace inter-électrodes sensiblement évasé, par exemple en forme de V, l'auxiliaire d'amorçage se situant entre lesdites électrodes, à la base étroite dudit V.

Il est remarquable que, du fait que les éclateurs 5, 7 associés en série au sein du dispositif 1 conforme à l'invention sont déclenchés simultanément, la mise en oeuvre du soufflage au sein de chacun desdits éclateurs, puis du fractionnement éventuel, intervient de préférence sensiblement en même temps dans l'ensemble desdits éclateurs.

De plus, le nombre et les dimensions des éclateurs élémentaires 5, 7 associés en série sont de préférence choisis de telle sorte que la fraction de tension appliquée respectivement à chacun desdits éclateurs corresponde sensiblement à la capacité individuelle de coupure de l'éclateur considéré. En d'autres termes, chaque éclateur élémentaire 5, 7 sera de préférence dimensionné de telle sorte que le fonctionnement du dispositif 1 dans sa globalité se traduise, au niveau dudit éclateur élémentaire, par un fonctionnement individuel conforme aux caractéristiques nominales propres dudit éclateur élémentaire.

Ainsi, le temps que le dispositif 1 met globalement pour couper le courant de suite qui le traverse pourra être sensiblement égal au temps nécessaire à l'un desdits éclateurs élémentaires 5, 7 pour interrompre l'arc électrique formé en son sein.

En particulier, la capacité de coupure du dispositif 1 pourra donc être favorisée par la mise en oeuvre d'éclateurs de petites dimensions permettant un soufflage et/ou un fractionnement rapides.

Ainsi, le dispositif 1 conforme à l'invention permet d'associer et de synchroniser une pluralité de sous-ensembles élémentaires séparés, chaque sous-ensemble élémentaire comprenant de préférence un éclateur et une chambre de coupure tous deux de dimensions standard, plutôt que de recourir à un seul ensemble surdimensionné associant un unique éclateur à une unique chambre de coupure, lequel serait encombrant et peu performant à la fois en termes de seuil de déclenchement (tension d'amorçage) et de vitesse d'interruption du courant de suite.

Bien entendu, le dispositif 1 conforme à l'invention peut comporter un nombre d'éclateurs associés en série supérieur à deux, chaque éclateur étant associé à un élément de déclenchement et éventuellement à une chambre de coupure individuelle.

Par ailleurs, le dispositif 1 conforme à l'invention peut comporter une ou plusieurs varistances destinées à protéger les moyens de déclenchement simultané 10, et plus particulièrement l'élément de commande 14, en limitant l'intensité du courant électrique susceptible de parcourir lesdits moyens de déclenchement simultané.

En particulier, sur le schéma illustré à la figure 1, la varistance V1 est apte à limiter le courant qui traverse l'éclateur à gaz 20 et le primaire du transformateur T1, c'est-à-dire l'élément de commande 14, tandis que la varistance V2 est apte à limiter le courant électrique qui traverse le premier auxiliaire d'amorçage 15 et le secondaire du premier transformateur T1 lorsqu'un arc (représenté en pointillés) s'établit entre l'électrode principale de l'éclateur 5 reliée à la borne de raccordement 2 et le premier auxiliaire d'amorçage 15. Ainsi, on évite que le courant de défaut ne s'écoule majoritairement à travers le premier élément de déclenchement 11, en court-circuitant une partie du premier éclateur 5 et le second éclateur 7 prévu à cet effet.

La variante de réalisation illustrée à la figure 1 présente également une troisième varistance V3, montée en dérivation par rapport au premier éclateur 5, dont le rôle est de polariser l'électrode principale du second éclateur 7 qui se trouve reliée au premier éclateur 5, de telle sorte que la décharge disruptive (représentée en pointillés) apparaisse entre ladite électrode principale reliée au premier éclateur 5 et le deuxième auxiliaire d'amorçage 16.

A l'inverse, la variante de réalisation illustrée sur la figure 2 permet d'obtenir une décharge disruptive (représentée en pointillés) entre le deuxième auxiliaire d'amorçage 16 et l'électrode principale du second éclateur 7 qui se trouve à l'opposé du premier éclateur 5, c'est-à-dire celle qui est reliée à la seconde borne de raccordement 3, laquelle est de préférence reliée à la terre. A cet effet, le dispositif 1 ne comporte pas, contrairement à la variante précédente, de varistance de polarisation V3 mais possède une varistance supplémentaire V4 destinée à limiter le courant électrique susceptible de traverser le second élément de déclenchement 12 lors de l'apparition de ladite charge disruptive.

En d'autres termes, les varistances V1, V2 et V4 permettent de séparer le circuit de puissance, formé par le premier et le second éclateurs 5, 7 et destiné à évacuer un courant de défaut de forte intensité, du circuit de commande, formé par l'élément de commande et les éléments de déclenchement, dont les composants sont plus sensibles et/ou fragiles.

De plus, il est remarquable que l'emploi de moyens de déclenchement simultané conformes à l'invention peut avantageusement permettre de s'affranchir d'une polarisation du *« point milieu »,* c'est-à-dire d'une polarisation du tronçon conducteur reliant le premier éclateur au second éclateur, ledit point milieu pouvant rester à potentiel flottant sans pour autant affecter le niveau de protection offert par le dispositif (en d'autres termes, le recours à une varistance de polarisation V3, par exemple, n'est plus absolument nécessaire).

Par ailleurs, le dispositif 1 peut également comporter un témoin de fonctionnement, tel qu'un voyant 23. Sur les variantes de réalisation illustrées aux figures 1 et 2, le voyant 23 est normalement éclairé lorsque le dispositif 1 est en service, c'est-à-dire lorsqu'une tension est appliquée entre les bornes de raccordement 2, 3. Ledit voyant 23 est susceptible de s'éteindre lorsque le premier et le second éclateurs 5, 7 se mettent en court-circuit, par exemple sous l'effet d'une pollution conductrice liée à leur vieillissement, ou encore lorsqu'un courant électrique d'intensité trop élevée circule dans le circuit formant les moyens de déclenchement simultané 10 et conduit à la fusion de l'un des ponts fusibles 24. Ainsi, le témoin de fonctionnement permet-il notamment de signaler une défaillance du dispositif 1, que celle-ci affecte le circuit de puissance ou le circuit de commande.

Le fonctionnement d'une variante de réalisation préférentielle d'un dispositif 1 conforme à l'invention va maintenant être brièvement décrit, en référence aux figures 1 et 2.

En fonctionnement normal et en l'absence de surtensions aux bornes de raccordement 2, 3, le premier et le second éclateurs 5, 7 se trouvent dans leur état bloquant et présentent une impédance élevée qui empêche sensiblement l'écoulement d'un courant électrique dans le circuit reliant lesdites bornes de raccordement 2, 3 au sein du dispositif 1.

De préférence, l'application aux bornes de raccordement 2, 3 d'une tension correspondant sensiblement à la tension nominale de fonctionnement de l'installation à protéger, et par conséquent à la tension nominale de fonctionnement du dispositif 1, se traduit par l'application aux bornes de chacun des premier et second éclateurs 5, 7 d'une tension élémentaire qui correspond sensiblement à sa tension nominale de fonctionnement respective.

Lorsqu'une surtension résultant par exemple d'un impact de foudre est appliquée aux bornes de raccordement 2, 3, celle-ci conduit à une augmentation de la tension aux bornes du condensateur C1 et par conséquent aux bornes de l'éclateur à gaz 20.

Cette augmentation de tension provoque l'amorçage dudit éclateur à gaz 20 qui court-circuite alors le condensateur C1 en provoquant la décharge de ce dernier à travers le primaire des transformateurs T1, T2. Cette décharge rapide forme une impulsion de courant qui est injectée dans le circuit primaire des transformateurs T1, T2 et est convertie en deux impulsions de tension synchrones, appliquées respectivement au premier et au second auxiliaires d'amorçage 15, 16.

La polarisation simultanée desdits premier et second auxiliaires d'amorçage 15, 16, chacun par rapport à l'une des électrodes principales respective des premier et second éclateurs 5, 7 auxquels ils sont associés, se traduit par une modification sensiblement simultanée des paramètres électriques au sein de chaque éclateur, qui place conjointement le premier et le second éclateur 5, 7 dans des conditions, notamment d'ionisation, propres à provoquer l'amorçage de chacun.

Lorsque l'amorçage sensiblement synchrone desdits premier et second éclateur se produit, le courant de défaut s'écoule, via lesdits premier et second éclateurs 5, 7, entre les bornes de raccordement 2 et 3 du dispositif 1.

Chacun des premier et second éclateurs 5, 7 souffle l'arc formé en son sein vers sa chambre de coupure respective 21, 22 de manière à éteindre ledit arc. Une fois la surtension écoulée, le courant de suite circulant entre les bornes de raccordement 2, 3 est interrompu dès que l'un desdits éclateurs 5, 7 associés en série parvient à interrompre l'arc qui lui est dévolu sous la fraction de tension qui lui est appliquée.

Un procédé de protection d'une installation électrique contre les surtensions va maintenant être décrit.

Au cours de ce procédé, on raccorde électriquement à l'installation électrique à protéger un dispositif de protection 1 pourvu d'une première borne de raccordement 2 et d'une seconde borne de raccordement 3, ledit dispositif comprenant un circuit reliant électriquement lesdites première et seconde bornes de raccordement 2, 3, ledit circuit comprenant une première branche 4 qui comporte au moins un premier composant de protection 5, ainsi qu'une seconde branche 6 qui comporte au moins un second composant de protection 7, lesdits premier et second composants de protection 5, 7 étant aptes à passer chacun d'un état bloquant dans lequel ils s'opposent à la circulation d'un courant électrique dans leur branche respective à un état passant dans lequel ils permettent à un courant de décharge de s'écouler dans leur branche respective.

Selon une caractéristique importante de l'invention, lesdites première et seconde branches 4, 6 sont associées électriquement en série, éventuellement au cours d'une étape (a) de raccordement en série, et ledit procédé de protection comprend une étape (b) de déclenchement simultané au cours de laquelle on fait passer sensiblement simultanément lesdits premier et second composants de protection 5, 7 de leur état bloquant à leur état passant.

De façon particulièrement préférentielle, l'étape (a) de raccordement en série est réalisée avant la mise en service du dispositif 1, l'association en série des branches 4, 6 étant définitive par construction.

Avantageusement, l'étape (b) de déclenchement simultané permet de raccourcir le temps de réponse du dispositif en cas d'apparition d'une surtension à ses bornes 2, 3.

Plus précisément, le passage de l'état bloquant à l'état passant s'effectue de préférence en un temps inférieur ou égal à 5 microsecondes, et de façon particulièrement préférentielle en un temps inférieur ou égal à 2 microsecondes.

De préférence, l'étape (b) de déclenchement simultané comprend une sous-étape (b₁) d'activation au cours de laquelle on active sensiblement simultanément, à l'aide d'un élément de commande 14, un premier et un second élément de déclenchement 11, 12 associés respectivement au premier et au second composant de protection 5, 7 de manière à faire passer lesdits premier et second composants de protection 5, 7 de leur état bloquant à leur état passant..

De façon particulièrement préférentielle, les premier et second composants de protection 5, 7 étant formés par un premier et un second éclateurs, et le premier et le second éléments de déclenchement 11, 12 comprenant respectivement un premier et un second auxiliaires d'amorçage 15, 16, l'étape (b) de déclenchement simultané comprend une sous-étape (b₂) d'amorçage au cours de laquelle on provoque l'apparition d'une décharge disruptive au niveau de chacun desdits premier et second éclateurs 5, 7 en activant simultanément lesdits premier et second auxiliaires d'amorçage 15, 16.

Plus précisément, cette activation peut être réalisée en soumettant à des impulsions de tension synchrones deux électrodes auxiliaires d'amorçage associées respectivement au premier et au second éclateur 5, 7.

De façon bien connue, l'apparition d'une étincelle entre chaque électrode auxiliaire d'amorçage et l'électrode principale de l'éclateur auquel elle est associée est susceptible de provoquer l'amorçage dudit éclateur.

Un procédé de fabrication d'un dispositif de protection d'une installation électrique contre les surtensions conforme à l'invention va maintenant être décrit.

Plus précisément, le procédé de fabrication conforme à l'invention concerne un dispositif 1 pourvu d'une première borne de raccordement 2 et d'une seconde borne de raccordement 3, ledit dispositif comprenant un circuit reliant électriquement lesdites première et seconde bornes de raccordement 2, 3, ledit circuit comprenant une première branche 4 qui comporte au moins un premier composant de protection 5 ainsi qu'une seconde branche 6 qui comporte au moins un second composant de protection 7, lesdits premier et second composants de protection 5, 7 étant aptes à passer chacun d'un état bloquant dans lequel ils s'opposent à la circulation d'un courant électrique dans leur branche respective à un état passant dans lequel ils permettent à un courant de décharge de s'écouler dans leur branche respective.

Selon une caractéristique importante de l'invention, ledit procédé de fabrication comprend une étape (E₁) d'association en série au cours de laquelle on associe électriquement en série lesdites première et seconde branches 4, 6, ainsi qu'une étape (E₂) de montage au cours de laquelle on monte au sein dudit dispositif des moyens de déclenchement simultanés 10 aptes à faire passer sensiblement simultanément lesdits premier et second composants de protection 5, 7 de leur état bloquant à leur état passant.

De préférence, les premier et second composants de protection 5, 7 sont formés par un premier et un second éclateurs comprenant chacun au moins deux électrodes principales entre lesquelles est susceptible de s'établir un arc électrique. Le procédé de fabrication conforme à l'invention comporte alors de préférence une étape (E₃) d'intégration d'auxiliaires au cours de laquelle on associe respectivement audits premier et second éclateurs 5, 7 un premier et un second auxiliaire d'amorçage 15, 16, tel qu'une électrode auxiliaire, aptes à provoquer l'apparition d'une décharge disruptive au niveau desdits éclateurs.

L'étape (E₃) d'intégration d'auxiliaires peut avantageusement être réalisée préalablement à l'étape (E₂) de montage ou au cours de celle-ci.

Selon une variante de réalisation préférentielle, l'étape (E₁) d'association en série peut consister à associer en série de manière irréversible le premier éclateur 5 et le second éclateur 7, par exemple en reliant une électrode principale dudit premier éclateur à une électrode principale dudit second éclateur par soudage à une même languette conductrice, par exemple métallique.

Le procédé de fabrication conforme à l'invention comprend de préférence une étape (E₄) de premier câblage au cours de laquelle on relie électriquement le premier auxiliaire d'amorçage 15 au circuit secondaire d'un premier transformateur T1, de telle sorte qu'il soit possible de faire varier le potentiel dudit premier auxiliaire d'amorçage en faisant circuler un courant électrique dans le circuit primaire dudit premier transformateur T1.

Le procédé de fabrication conforme à l'invention comprend également de préférence une étape (E₅) de second câblage au cours de laquelle on relie électriquement le second auxiliaire d'amorçage 16 au circuit secondaire d'un second transformateur T2, de telle sorte qu'il soit possible de faire varier le potentiel dudit second auxiliaire d'amorçage en faisant circuler un courant électrique dans le circuit primaire dudit second transformateur T2.

Les étapes (E₄) et (E₅) de câblage peuvent avantageusement constituer une sous-étape de l'étape (E₂) de montage.

De préférence, ledit procédé de fabrication comprend une étape de réalisation d'un transformateur unique comprenant un circuit primaire et deux circuits secondaires destinés à être reliés respectivement au premier et au second auxiliaires d'amorçage.

Selon une variante de réalisation, l'étape (E₂) de montage peut consister à associer à chacun des éclateurs une électrode d'amorçage puis à brancher les deux électrodes d'amorçage en parallèle aux bornes d'un même circuit secondaire d'un unique transformateur.

Ainsi, le dispositif 1 conforme à l'invention permet-il avantageusement d'améliorer la capacité de coupure du courant de suite par l'association en série d'éclateurs pourvus de préférence de chambres de coupure, tout en conservant une durée d'amorçage particulièrement faible, c'est-à-dire un temps de réponse très court du dispositif et par conséquent un excellent niveau de protection vis-à-vis de l'installation électrique à laquelle est raccordé ledit dispositif.

Avantageusement, le dispositif 1 conforme à l'invention permet d'associer une pluralité de chambres de coupure, c'est-à-dire d'améliorer la capacité de coupure pour une tension nominale de fonctionnement donnée et/ou de conserver une bonne capacité de coupure tout en multipliant le nombre d'éclateurs élémentaires afin d'adapter le dispositif 1 à une tension nominale de fonctionnement plus élevée.

De façon particulièrement avantageuse, le dispositif 1 conforme à l'invention permet d'associer des composants standard, bon marché et présentant une plus grande souplesse d'agencement que des composants surdimensionnés, ce qui permet de limiter le coût de fabrication et l'encombrement dudit dispositif.

## Revendications

1. Dispositif de protection (1) d'une installation électrique contre les surtensions pourvu d'une première borne de raccordement (2) et d'une seconde borne de raccordement (3) destinées à permettre le raccordement électrique dudit dispositif à ladite installation électrique, ledit dispositif comprenant :
- un circuit reliant électriquement lesdites première et seconde bornes de raccordement (2, 3), ledit circuit comprenant une première branche (4) qui comporte au moins un premier composant de protection (5) ainsi qu'une seconde branche (6) qui comporte au moins un second composant de protection (7), lesdits premier et second composants de protection (5, 7) étant aptes à passer chacun d'un état bloquant dans lequel ils s'opposent à la circulation d'un courant électrique dans leur branche respective à un état passant dans lequel ils permettent à un courant de décharge de s'écouler dans leur branche respective ;
- des moyens de déclenchement simultané (10) aptes à faire passer sensiblement simultanément lesdits premier et second composants de protection (5, 7) de leur état bloquant à leur état passant, le premier et/ou le second composant de protection (5, 7) étant formés respectivement par un premier et un second éclateur et les moyens de déclenchement simultané (10) comprenant un premier et un second élément de déclenchement (11, 12) associés respectivement au premier et au second composant de protection (5, 7), lesdits éléments de déclenchement (11, 12) étant aptes, lorsqu'ils sont activés, à faire passer lesdits premier et second composants de protection (5, 7) de leur état bloquant à leur état passant ; et
- un élément de commande (14) susceptible d'activer sensiblement simultanément le premier et le second élément de déclenchement (11,12);
dans lequel :
- le premier et/ou le second élément de déclenchement (11, 12) comprennent respectivement un premier et un second auxiliaire d'amorçage (15, 16), lesdits auxiliaires d'amorçage (15, 16) étant aptes à provoquer, lors de l'activation respective desdits premier et second éléments de déclenchement (11, 12), l'apparition d'une décharge disruptive au niveau du premier et du second éclateur (5, 7) respectivement ;
- le premier auxiliaire d'amorçage (15) est relié électriquement au circuit secondaire d'un premier transformateur (T1), de telle sorte qu'il est possible de faire varier le potentiel dudit premier auxiliaire d'amorçage (15) en faisant circuler un courant électrique dans le circuit primaire dudit premier transformateur (T1) ;
- le second auxiliaire d'amorçage (16) est relié électriquement au circuit secondaire d'un second transformateur (T2), de telle sorte qu'il est possible de faire varier le potentiel dudit second auxiliaire d'amorçage (16) en faisant circuler un courant électrique dans le circuit primaire dudit second transformateur (T2) ;
**caractérisé en ce que :**
- la première et la seconde branche (4, 6) sont associées électriquement en séné; et
- lesdits premier et second transformateurs (T1, T2) présentent un circuit primaire commun, ou bien lesdits premier et second transformateurs sont distincts et leurs circuits primaires respectifs sont reliés en série.

2. Dispositif selon la revendication 1 dans lequel les moyens de déclenchement simultané (10) sont agencés pour conférer au dispositif (1) un temps de réponse inférieur ou égal à 5 microsecondes, et de préférence inférieur ou égal à 2 microseconde,

3. Dispositif selon la revendication 1 ou 2, dans lequel le premier et le second auxiliaire d'amorçage (15, 16) sont formés chacun par une électrode auxiliaire.

4. Dispositif selon l'une des revendications 1 à 3 dans lequel l'élément de commande (14) comporte un condensateur (C1) dont la décharge est susceptible de déclencher l'activation simultanée du premier et du second élément de déclenchement (11, 12).

5. Dispositif selon l'une des revendications 1 à 4 dans lequel l'élément de commande (14) est sensible à la tension appliquée aux bornes de raccordement (2, 3) du dispositif (1) et apte à activer les premier et second éléments de déclenchement (11, 12) lorsque cette dernière franchit un seuil prédéterminé.

6. Dispositif selon les revendications 4 et 5 dans lequel l'élément de commande (14) comporte un éclateur à gaz (20) associé en parallèle au condensateur (C1) de telle sorte que, lorsque ledit éclateur à gaz (20) se déclenche, il court-circuite ledit condensateur (C1) qui se décharge dans le circuit primaire du ou des transformateurs (T1, T2).

7. Dispositif selon la revendication 1 dans lequel le premier et/ou le second éclateur (5, 7) sont associés chacun à une chambre de coupure (21, 22) susceptible d'éteindre un arc électrique formé au niveau de l'éclateur correspondant.

8. Dispositif selon l'une des revendications précédentes lequel constitue un parafoudre,

9. Utilisation du dispositif selon l'une quelconque des revendications 1 à 8 pour protéger une installation électrique contre les surtensions.

## Claims

1. A device (1) for overvoltage protection of an electrical installation, provided with a first connection terminal (2) and a second connection terminal (3) to enable electrical connection of said device to said electrical installation, said device including:
- a circuit electrically connecting said first and second connection terminals (2, 3), said circuit comprising a first branch (4) including at least a first protective component (5) and a second branch (6) comprising at least a second protective component (7), said first and second protective components (5, 7) each being able to pass from a blocking state in which they oppose the flow of electric current in their respective branches to a conductive state in which they allow a discharge current to flow in their respective branch ;
- simultaneous triggering means (10) adapted to substantially simultaneously move said first and second protective components (5, 7) from their blocking state to their conducting state, the first and/or the second protective components (5, 7 ) being formed respectively by a first and a second spark gap and the simultaneous triggering means (10) comprising a first and a second triggering element (11, 12) respectively associated with first and second protective component (5, 7), said triggering elements (11, 12) being adapted, when activated, to cause said first and second protective components (5, 7) to change from their blocking state to their conducting state, and
- a control element (14) able to activate, substantially simultaneously, the first and second triggering element (11, 12);
in which:
- the first and/or the second triggering elements (11, 12) respectively comprise a first and a second discharge initiating means (15, 16), said discharge initiating means (15, 16) being adapted to bring about, upon respective activation of said first and second triggering elements (11, 12), the emergence of a disruptive discharge at the first and second spark gap (5, 7) respectively;
- the first discharge initiating means (15) is electrically connected to the secondary circuit of a first transformer (T1), whereby it is possible to vary the potential of said first discharge initiating means (15) by causing an electric current to circulate in the primary circuit of said first transformer (T1);
- the second discharge initiating means (16) is electrically connected to the secondary circuit of a second transformer (T2), whereby it is possible to vary the potential of said second discharge initiating means (16) by causing an electric current to circulate in the primary circuit of said second transformer (T2);
**characterized in that**:
- the first and second branch (4, 6) are electrically associated in series and
- said first and second transformers (T1, T2) have a common primary circuit, or said first and second transformers are separate and their respective primary circuits are connected in series.

2. The device according to claim 1 wherein the simultaneous triggering means (10) are arranged to give the device (1) a response time less than or equal to 5 microseconds, and preferably less than or equal to 2 microseconds.

3. The device according to claim 1 or 2, wherein the first and second discharge initiating means (15, 16) are each formed by an auxiliary electrode.

4. The device according to one of claims 1-3 in which the control element (14) includes a capacitor (C1), discharge of which is adapted to trigger simultaneous activation of both the first and second triggering element (11, 12).

5. The device according to claim 1-4 in which the control element (14) is responsive to the voltage apply to the terminals (2, 3) of the device (1) and adapted to activate the first and second elements triggering means (11, 12) when the voltage exceeds a predetermined threshold.

6. The device according to claims 4 and 5 in which the control element (14) includes a gas discharge tube (20) combined in parallel with the capacitor (C1) so that when the gas discharge tube (20) is triggered, it short-circuits the capacitor (C1) which discharges into the primary circuit of the transformer or transformers (T1, T2).

7. The device according to claim 1 wherein the first and/or the second spark gap (5, 7) are each associated with a quenching chamber (21, 22) capable of extinguishing an electrical are formed at the corresponding spark gap.

8. The device according to any preceding claim constituting a surge arrestor.

9. Use of the device according to any of claims 1-8 for overvoltage protection of an electrical installation.

## Patentansprüche

1. Vorrichtung (1) zum Schutz einer elektrischen Anlage vor Überspannungen, die mit einer ersten Anschlussklemme (2) und einer zweiten Anschlussklemme (3) versehen ist, die dazu bestimmt sind, den elektrischen Anschluss der Vorrichtung an die elektrische Anlage zu ermöglichen, wobei die Vorrichtung umfasst:
- eine Schaltung, welche die erste und die zweite Anschlussklemme (2, 3) elektrisch verbindet, wobei die Schaltung einen ersten Zweig (4), welcher mindestens ein erstes Schutzbauteil (5) aufweist, sowie einen zweiten Zweig (6), welcher mindestens ein zweites Schutzbauteil (7) aufweist, umfasst, wobei das erste und das zweite Schutzbauteil (5, 7) jeweils dazu befähigt sind, aus einem Sperrzustand, in welchem sie der Fluss eines elektrischen Stroms in ihrem jeweiligen Zweig verhindern, zu einem Durchlasszustand, in welchem sie einem Entladestrom in ihrem jeweiligen Zweig zu fließen gestatten, überzugehen;
- Mittel zur gleichzeitigen Auslösung (10), die dazu befähigt sind zu bewirken, dass das erste und das zweite Schutzbauteil (5, 7) im Wesentlichen gleichzeitig aus ihrem Sperrzustand zu ihrem Durchlasszustand übergehen, wobei das erste und/oder das zweite Schutzbauteil (5, 7) von einer ersten bzw. einer zweiten Funkenstrecke gebildet wird und die Mittel zur gleichzeitigen Auslösung (10) ein erstes und ein zweites Auslöseelement (11, 12) umfassen, die dem ersten bzw. dem zweiten Schutzbauteil (5, 7) gepaart sind, wobei die Auslöseelemente (11, 12), wenn sie aktiviert sind, dazu befähigt sind zu bewirken, dass das erste und das zweite Schutzbauteil (5, 7) aus ihrem Sperrzustand zu ihrem Durchlasszustand übergehen; und
- ein Steuerungselement (14), das dazu geeignet ist, das erste und das zweite Auslöseelement (11, 12) im Wesentlichen gleichzeitig zu aktivieren;
wobei:
- das erste und/oder das zweite Auslöseelement (11, 12) ein erstes bzw. ein zweites Zündhilfsmittel (15, 16) umfasst, wobei die Zündhilfsmittel (15, 16) dazu befähigt sind, bei der Aktivierung des ersten bzw. des zweiten Auslöseelements (11, 12) das Auftreten einer Durchschlagsentladung an der ersten bzw. der zweiten Funkenstrecke (5, 7) hervorzurufen;
- das erste Zündhilfsmittel (15) elektrisch mit dem Sekundärkreis eines ersten Transformators (T1) verbunden ist, derart, dass es möglich ist, das Potential des ersten Zündhilfsmittels (15) zu ändern, indem man einen elektrischen Strom in dem Primärkreis des ersten Transformators (T1) fließen lässt;
- das zweite Zündhilfsmittel (16) elektrisch mit dem Sekundärkreis eines zweiten Transformators (T2) verbunden ist, derart, dass es möglich ist, das Potential des zweiten Zündhilfsmittels (16) zu ändern, indem man einen elektrischen Strom in dem Primärkreis des zweiten Transformators (T2) fließen lässt;
**dadurch gekennzeichnet, dass**
- der erste und der zweite Zweig (4, 6) elektrisch in Reihe geschaltet sind; und
- der erste und der zweite Transformator (T1, T2) einen gemeinsamen Primärkreis aufweisen, oder der erste und der zweite Transformator verschieden sind und ihre jeweiligen Primärkreise in Reihe geschaltet sind.

2. Vorrichtung nach Anspruch 1, wobei die Mittel zur gleichzeitigen Auslösung (10) so angeordnet sind, dass sie der Vorrichtung (1) eine Reaktionszeit verleihen, die kleiner als oder gleich 5 Mikrosekunden und vorzugsweise kleiner als oder gleich 2 Mikrosekunden ist.

3. Vorrichtung nach Anspruch 1 oder 2, wobei das erste und das zweite Zündhilfsmittel (15, 16) jeweils von einer Hilfselektrode gebildet werden.

4. Vorrichtung nach einem der Ansprüche 1 bis 3, wobei das Steuerungselement (14) einen Kondensator (C1) aufweist, dessen Entladung dazu geeignet ist, die gleichzeitige Aktivierung des ersten und des zweiten Auslöseelements (11, 12) auszulösen.

5. Vorrichtung nach einem der Ansprüche 1 bis 4, wobei das Steuerungselement (14) empfindlich gegenüber der Spannung ist, die an den Anschlussklemmen (2, 3) der Vorrichtung (1) aufdrückt, und dazu befähigt ist, das erste und das zweite Auslöseelement (11, 12) zu aktivieren, wenn diese Letztere einen vorbestimmten Schwellwert überschreitet.

6. Vorrichtung nach einem der Ansprüche 4 und 5, wobei das Steuerungselement (14) einen Gasentladungsableiter (20) aufweist, der dem Kondensator (C1) parallelgeschaltet ist, derart, dass, wenn der Gasentladungsableiter (20) auslöst, er den Kondensator (C1) kurzschließt, welcher sich in den Primärkreis des oder der Transformatoren (T1, T2) entlädt.

7. Vorrichtung nach Anspruch 1, wobei die erste und/oder die zweite Funkenstrecke (5, 7) jeweils einer Schaltkammer (21, 22) gepaart ist, die dazu geeignet ist, einen elektrischen Lichtbogen zu löschen, der an der entsprechenden Funkenstrecke gebildet wird.

8. Vorrichtung nach einem der vorhergehenden Ansprüche, welche einen Blitzableiter darstellt.

9. Verwendung der Vorrichtung nach einem der Ansprüche 1 bis 8, um eine elektrische Anlage vor Überspannungen zu schützen.
